# EUROPÄISCHE PATENTSCHRIFT

(11) **EP 2 443 345 B1**
(45) Veröffentlichungstag und Bekanntmachung des Hinweises auf die Patenterteilung: **16.12.2015**
(21) Anmeldenummer: 10718596.9
(22) Anmeldetag: 10.05.2010
(51) Int. Cl.: F04D 25/06, F04D 29/059, F04D 29/10, F16J 15/32, H02K 5/124, H02K 5/136, H02K 5/173

(54) **WELLENDICHTUNGSANORDNUNG**
SHAFT SEALING ARRANGEMENT
DISPOSITIF D'ÉTANCHÉITÉ D'ARBRE

(30) Priorität: 17.06.2009 DE 102009025649; 05.08.2009 DE 102009036149
(43) Veröffentlichungstag der Anmeldung: 25.04.2012
(73) Patentinhaber: EBM-PAPST Landshut GmbH, 84030 Landshut (DE)
(72) Erfinder: TUNGL, Rudolf, 84030 Ergolding (DE); LUTZ, Josef, 84034 Landshut (DE)
(74) Vertreter: Peter, Julian
(86) Internationale Anmeldenummer: PCT/EP2010/056382
(87) Internationale Veröffentlichungsnummer: WO 2010/145890

(56) Entgegenhaltungen:
- EP-A1- 0 562 160
- EP-A1- 0 844 407
- EP-A1- 2 031 252
- DE-A1- 4 209 320
- DE-A1- 10 204 037
- US-A1- 2003 170 121

## Beschreibung

Die vorliegende Erfindung betrifft eine Gebläseanordnung umfassend einen Elektromotor mit Motorwelle, ein von der Motorwelle angetriebenes, in einem Gehäuse angeordnetes Gebläserad, mindestens ein Wellenlager, eine Wellendichtungsanordnung, die die Form eines Topfes aufweist, wobei das mindestens eine Wellenlager in die Wellendichtungsanordnung, die eine Dichtungsöffnung für den Durchtritt der Motorwelle aufweist, eingesetzt ist.

### Stand der Technik

Aus der DE 102 04 037 ist eine gattungsgemäße Dichtungsanordnung bekannt, welche als Elastomerdichtung bezeichnet wird. Diese Elastomerdichtung umfasst einen topfartigen Einspannbereich, der mit seiner zylindrischen Außenmantelfläche in eine Lageraufnahme für ein Wälzlager in einen Lagerschild der Gebläseanordnung eingeschoben werden kann. Der topfartige Einspannbereich dient zur Aufnahme eines Wellenlagers, das radial in die Dichtungsanordnung eingeklemmt wird.

Die Stirnseiten der zylindrischen Außenmantelfläche weisen jeweils einen Randabschnitt auf, der im rechten Winkel zur Symmetrieachse hin übergeht..Diese Randabschnitte sind in Form eines Kreisrings ausgebildet, wobei der eine einen hinteren Anschlag für das Einschieben der Elastomerdichtung in eine Lageraufnahme bildet und der andere sich nach außen in einem äußeren Kreisringabschnitt fortsetzt. Somit ergibt sich für den anderen, nach außen in einem äußeren Abschnitt fortgesetzten Randabschnitt ein Kreisring, dessen Außendurchmesser größer ist als der der zylindrischen Außenmantelfläche. Am äußeren Rand des fortgesetzten Randabschnitts wölbt sich die Elastomerdichtung mit engem Radius schräg nach hinten und nach außen, d. h. in Richtung zum anderen stirnseitigen Randabschnitt. Dieser fortgesetzte gewölbte Randabschnitt bildet nach Erreichen der Höhe des anderen Randabschnitts eine Auflagekante mit relativ kleinem Radius und wölbt sich wieder mit ungefähr gleichem Winkel zurück, so dass insgesamt ein Dachprofil gebildet wird, wobei die nach unten laufende zweite Hälfte des Daches eine kürzere Länge aufweist. Das Ende der nach unten laufenden Dachhälfte ist als umlaufende Dichtkante ausgeführt, mit der Funktion, zwei Räume gegeneinander abzudichten.

Bei der bekannten Dichtungsanordnung ist nachteilig, dass diese keine Dichtung bietet, die den Austritt von Schmieröl aus dem Motorinnenraum bzw. den Eintrag von Schmutz in den Motorinnenraum verhindert. Ferner ist nachteilig, dass ein weiterer Montageschritt für die separate Installation einer Öldichtung, sowie ein Bauraum innerhalb der Baugruppe benötigt werden.

Folglich bedarf es eines erhöhten Montageaufwands und eines gesteigerten Platzbedarfs zur Installation einer Öldichtung.

Ferner ist es bei der Durchführung von Prüfaufgaben, insbesondere bei der Druckprüfung wünschenswert, eine geringe Abmessung der Gebläseanordnung bereitzustellen, um entsprechende Prüfapparaturen leicht anzubringen und wieder zu entfernen.

Die Gebläseanordnungen werden häufig in der Heiztechnik als vormischende Gebläse eingesetzt, wobei üblicherweise Gas und Luft zu einem zündfähigen vorgemischt werden. Es ist deshalb von entscheidender Bedeutung, dass die Gebläseanordnungen dicht sind und das zündfähige Gemisch nicht austreten kann.

Bei der Dichtheitsprüfung einer zusammengebauten Gebläseanordnung, insbesondere auch der Wellendichtung, ist seit langer Zeit problematisch, dass die häufig als Kugellager ausgebildeten Wellenlager undicht sind und die Gebläseanordnung während der Prüfung über das bzw. die Lager Luft ansaugt. Aufgrund unterschiedlicher Fettverteilung im Lager kann für die Lager kein fester Verlustwert berücksichtigt werden (undefinierte Leckrate), der die Messwerte bei den unterschiedlichen Gebläseanordnungen reproduzierbar machen würde. Bisher musste zur Prüfung der Dichtheit des Gehäuses der Gebläseanordnung über die Baueinheit der Elektronik, der Motorwelle und der Wellenlager eine atmosphärisch dichte Glocke gesetzt werden, um ein von der Dichtheit der Wellendichtung bzw. der Lager unabhängiges Ergebnis zu erzielen. Die Glocke stellte eine Dichtheit der Baueinheit unabhängig von dem Gehäuse sicher.

Daher ist es Aufgabe der Erfindung, eine Gebläseanordnung mit den zugehörigen Komponenten Elektromotor, Motorwelle, Wellenlager und Wellendichtungsanordnung derart zu gestalten, dass die Dichtheitsprüfung der Gebläseanordnung erleichtert wird sowie, dass Montage- und Materialkosten eingespart werden und die Langlebigkeit des Produktes erhöht wird.

Diese Aufgabe wird mit dem Gegenstand des unabhängigen Patentanspruchs 1 gelöst. Merkmale vorteilhafter Weiterbildungen der Erfindung ergeben sich aus den abhängigen Ansprüchen.

Für eine Gebläseanordnung, die nachfolgende Bestandteile umfasst, wie einen Elektromotor mit Motorwelle, ein von der Motorwelle angetriebenes, in einem Gehäuse angeordnetes Gebläserad, mindestens ein Wellenlager, eine Wellendichtungsanordnung, die die Form eines Topfes aufweist, wobei das mindestens eine Wellenlager in die Wellendichtungsanordnung, die eine Dichtungsöffnung für den Durchtritt der Motorwelle aufweist, ist es günstig, wenn die Wellendichtungsanordnung um die Dichtungsöffnung herum als ein sich radial erstreckender Boden-Ringbereich ausgebildet ist, der zur Dichtungsöffnung hin mindestens eine Dichtlippe aufweist. Der Vorteil dieser Ausgestaltung liegt in einer einfach und sicher handhabbaren Gebläseanordnung, deren Dichtheitsprüfung erleichtert wird und reproduzierbare Ergebnisse gewährleistet. Auch werden Montage- und Materialkosten eingespart.

In einer bevorzugten Ausführung ist die Wellendichtungsanordnung ausgebildet, das mindestens eine Wellenlager abzudichten. Dadurch kann die Dichtheitsprüfung an der zusammengebauten Gebläseanordnung durchgeführt werde, ohne eine zusätzliche Dichtglocke zu verwenden. Eine Ansaugung von Fremdluft durch das Wellenlager während der Dichtheitsprüfung wird vermieden.

Ferner ist vorteilhaft, dass die Gebläseanordnung dadurch gekennzeichnet ist, dass die Dichtlippe in zur Motorwelle axialer Richtung vor und/oder hinter dem mindestens einen Wellenlager ausgebildet sein kann. Die Gebläseanordnungen verfügen teils über ein, teils über mehrere Wellenlager. Die Abdichtung mittels Wellendichtungsanordnung und Dichtlippe erfolgt hierbei vor und/oder hinter dem Lager, wobei "vor" bzw. "hinter" axial außenseitig bzw. axial innenseitig bezüglich der Lagerung entlang der Motorwelle meint.

Bei der Ausgestaltung der Dichtlippe ist es möglich, dass diese, bevorzugt in einem Bereich von 15 - 45 Grad, abgewinkelt ist. Der Winkel der Abwinklung wird hierbei aus einer zur Achse der Motorwelle senkrechten Ebene bestimmt. Eine derart ausgestaltete Dichtlippe birgt den Vorteil in sich, dass der Eintrag von Schmutz und/oder der Austritt von Schmieröl verhindert wird.

Die Wellendichtungsanordnung kann aus mindestens zwei Teilbereichen bestehen, nämlich mindestens aus einem Boden-Ringbereich und mindestens aus einem Lager-Ringbereich. Hierbei umfasst der Lagerringbereich der Dichtungsanordnung günstigerweise eine zylindrische Mantelfläche.

Die zylindrische Mantelfläche nimmt in einem Presssitz das Wellenlager auf und kann somit das radiale Lagerspiel eliminieren.

Alternativ ist es möglich, den Lagerringbereich mit der Mantelfläche nicht zylinderförmig, sondern als eine Art Kegelstumpf auszubilden.

Hingegen kann der Bodenringbereich eine Stirnseite des Zylinders mit Dichtungsöffnung bilden.

Hierbei ist eine Abweichung der kreisförmigen Stirnseite bzw. Grundfläche des Zylinders in eine Polyederform möglich, wobei dann die Lageraufnahme im Gehäuse der Gebläseanordnung dementsprechend angepasst ist.

Die Oberflächen des Bodenringbereichs und der Mantelfläche können einen Winkel zwischen 45 und 135 Grad einschließen, wobei ein rechter Winkel bevorzugt ist.

Vorteilhafterweise weist der Bodenringbereich eine dreigliedrige Form auf, nämlich einen Einspannringbereich, einen Auslenkringbereich und eine Dichtlippe.

Hierbei ist es möglich, dass die Wellendichtungsanordnung auf der dem Wellenlager zugewandten Seite einen Einspannringbereich aufweist. Dieser schließt sich als erster Formabschnitt radial nach innen laufend an die zylindrische Mantelfläche an. Vorteilhaft an der Ausbildung eines Einspannringbereichs ist, dass ein Wellenlager auf diesen Ring gespannt werden kann. Somit wird zum einen der Kraftfluss einer angestellten Lagerung sichergestellt wird, und zum anderen das Blockieren durch Materialverformung der Wellendichtungsanordnung in das Wellenlager vermieden.

Im Anschluss an den Einspannringbereich ist es günstig, wenn dieser als zweiter Formabschnitt radial einwärts in einem Auslenkringbereich übergeht, an welchem der dritte Formabschnitt, die Dichtlippe, angeordnet ist.

Die Anordnung aller Formabschnitte der dreigliedrigen Form in einer Ebene kann abweichen. Dabei ist es möglich, dass die Formabschnitte zueinander verschiedene Winkelorientierung aufweisen.

Die Winkelorientierung der Formabschnitte kann sich in einem Bereich zwischen 90 und 180 Grad abzeichnen, wobei ein rechter Winkel des Einspannringbereichs zur zylindrischen Mantelfläche bevorzugt wird.

Der Winkel zwischen dem Auslenkringbereich und dem Einspannringbereich erhebt sich günstigerweise aus der Ebene des Einspannringbereichs und liegt bevorzugterweise in einem Bereich zwischen -30 und 30 Grad. Dabei ist die bevorzugte Drehrichtung entgegen dem Uhrzeigersinn (mathematisch positive Drehrichtung).

Beim Auslenkringbereich ist es zudem möglich, dass dieser sich zuerst in gleicher Winkelorientierung zum Einspannringbereich fortsetzt und sich dann nach ca. 30 bis 70 Prozent seiner Gesamtausdehnung in radialer Richtung räumlich im genannten Winkelbereich umorientiert.

Die Dichtlippe als dritter Teilabschnitt kann sich radial nach innen und bevorzugt aus der Ebene des Auslenkringbereichs, speziell aus der Ebene nach der Umorientierung, in einem Winkel zwischen 10 und -90 Grad erheben, wobei die bevorzugte Drehrichtung im Uhrzeigersinn (mathematisch negative Drehrichtung) ist.

Vorteilhaft an dieser Ausgestaltung ist das bessere Zurückhalten von Schutz bzw. von Schmieröl.

Der im Topfboden kreisringförmig ausgebildete Einspannringbereich kann einen Kraftfluss einer gegen einen Absatz gespannten Lagerung, und zwar von z. B. einem Gehäuse durch den Einspannringbereich hin zu einem Außenring eines Wellenlagers und weiter durch das Lager hin zu einem Innenring, ermöglichen. Hierbei ist der Einspannringbereich vorteilhafterweise durch eine Auflagefläche im Topfinneren für einen Wellenlageraußenring gekennzeichnet, wobei günstigerweise die seitliche Auflagefläche mindestens der Höhe des Lageraußenrings entspricht.

Der Lagerringbereich bzw. die zylindrische Mantelfläche, kann eine Wandstärke aufweisen, die kleiner, gleich oder größer ist als die Wandstärke des Einspannringbereichs. Somit kann eine axiale Dämpfeigenschaft zur Schwingungsdämpfung eingestellt werden.

Der Auslenkringbereich ist das Verbindungsglied zwischen Einspannringbereich und Dichtlippe und kann als Positionshalteelement für die Dichtlippe dienen. Diesem Element zur Positionskontrolle ist es möglich, eine Bewegung der Dichtlippe entlang der Motorwelle zu verhindern, wobei vorteilhafterweise stets wieder auf die bevorzugte Position bei Endmontage zurückgestellt wird.

Bei einer bevorzugten Ausführung weist der Auslenkringbereich eine geringere Wandstärke auf als der Einspannringbereich der Wellendichtungsanordnung. Somit kann eine maximale Bewegungsfreiheit auf der Welle für den Lagerinnenring gewährleistet werden, wobei gleichzeitig negative Reibeinflüsse zwischen Lager und Wellendichtungsanordnung minimiert werden können. Während sich der Einspannringbereich als rechteckiger Bereich aus der Mantelfläche erheben kann, schließt sich daran bevorzugterweise der im Winkel abweichende Auslenkringbereich an.

Dieser kann sich hinsichtlich des Einspannringbereichs dadurch unterscheiden, dass er eine geringe Wandstärke und eine abweichende Form aufweist.

Die Form des Auslenkringbereichs kann im Schnitt betrachtet keilförmig und in Richtung der Welle zulaufend sein, wobei an dem radial inneren Ende die mindestens eine Dichtlippe angeordnet sein kann.

Hierbei ist es möglich, dass der Auslenkringbereich mit der Dichtlippe auch an die Form eines Hakens erinnert. Mit dieser besonderen Ausgestaltung als Haken ist es dem Auslenkringbereich möglich, die oben erwähnte Aufgabe der Positionskontrolle zu erfüllen. Somit kann stets auf die bevorzugte Position der Dichtlippe, welche sich an den Auslenkringbereich anschließen kann, auf der Motorwelle zurückgestellt werden.

Die Dichtlippe als Fortsetzung der Form des Auslenkringbereichs berührt günstigerweise in einer Linie mit ihrem am weitest radial innen befindlichen Ende die Mantelfläche der Motorwelle.

Somit kann sie der Abdichtung des Elektromotorinnenraums dienen, wobei Schmutz, der z. B. aufgrund der Wärmeentwicklung des drehenden Motors einen Kurzschluss verursachen könnte, vom Eindringen in den Motorinnenraum abgehalten werden kann.

Hierbei ist es günstig, wenn die Dichtungsöffnung für den Wellendurchtritt im Boden des Topfes, gebildet von der Dichtlippe, einen gleichen oder einen kleineren Durchmesser als den der Motorwelle aufweist. Somit kann eine gute Abdichtung des Motorinnenraums gewährleistet werden.

Die Dichtlippe kann entweder eine spitze Form aufweisen, die sich aus der Fortführung des Auslenkringbereichs ergibt, oder sie kann eine stumpfe Form aufweisen. Die stumpfe Form kann aus einer verrundeten Keil- oder Hakenspitze oder aus einem verrundeten Rechteck oder z. B. aus einer auf eine beliebige Form aufgesetzten Kugel bestehen.

An der offenen Stirnseite der topfförmigen Gestalt bzw. der zylindrischen Mantelfläche kann die Mantelfläche an ihrem Inneren einen angephasten Bereich aufweisen, der das Einsetzen eines Lagers erleichtert.

In einer alternativen Ausführung kann die Dichtungsanordnung einen weiteren Teilbereich aufweisen. Dieser Teilbereich kann die Wellendichtungsanordnung in einer Erweiterung fortsetzen. Dazu ist es günstig, wenn die Erweiterung so ausgebildet ist, dass die Motorwelle und mindestens ein Gehäuse abgedichtet werden können. Dies erlaubt eine platzsparende Konstruktion und die Einsparung mindestens eines Montageschritts.

Hinsichtlich der Form der Erweiterung ist eine räumlich-wellenartige bevorzugt. Diese kann bei einer Schnittbetrachtung zick-zack-artig oder wellenartig ausgebildet ist, wobei eine die Übergänge verrundet oder spitz ausgebildet sein können.

Nach Durchschreiten eines Übergangs ist es möglich, dass die räumlich-wellenartige Erweiterung endet, so dass als Ende die Form eines runden Wellentals bleibt, das eine umlaufende Dichtkante mit der Funktion, zwei Räume gegeneinander abzudichten, darstellen kann.

Somit stellt die Wellendichtungsanordnung bevorzugt aufgrund der Formgebung der Erweiterung eine federnde Anlage bereit, die mit Druck gegen ein Gehäuse anliegen kann. Hierbei ist es vorteilhaft, wenn zur Ausübung des Anlagedrucks die federnd ausgebildete Erweiterung an einem Randabschnitt, der am Übergang der zylindrischen Mantelfläche zur Erweiterung angeordnet ist, abgestützt ist.

Durch die Ausbildung der Erweiterung bzw. dem Bereitstellen einer federnden Anlage kann eine gute Dichtwirkung erreicht werden, da die federnde Anlage die Bewegungen eines vibrierenden Gehäuses günstigerweise abfedert, ohne dabei einen Dichtspalt entstehen zu lassen. Somit kann die räumlich-wellenartige Erweiterung abdichtend an einer zugewandten Fläche am Gehäuse anliegen und eine Schwingungsdämpfung dieses Gehäuseteils ermöglichen, das ein besonderes eigenes Resonanzverhalten entwickeln kann.

In einer weiteren Ausführungsform kann auf der Außenseite des Topfbodens eine Einknöpfnut als Befestigungsmöglichkeit vorgesehen sein.

In die Einknöpfnut greift der Innenumfang einer Durchgangsbohrung für die Motorwelle in das Gehäuse ein. Auf diese Weise kann die gesamte Dichtungsanordnung kraft- und formschlüssig an dem zugeordneten Bauteil gehalten werden und kann ihre Lage während des weiteren Montagevorgangs unverändert beibehalten. Hierbei ist eine Hakenform für die Einknöpfnut bevorzugt, da diese den Innenumfang umgreifen und nach dem Durchdringen der Durchgangsbohrung einrasten kann.

Alle zuvor einzeln erläuterten Teilbereiche der Wellendichtungsanordnung können gleiche oder verschiedene Materialien mit elastischem Verhalten aufweisen. Bei einer bevorzugten Ausgestaltung der Erfindung umfasst mindestens der Teil der Dichtungsanordnung, weicher mindestens eine Dichtlippe aufweisen kann, z. B. ein Fluorpolymer, vorzugsweise Polytetrafluorethylen (PTFE) und/oder ein Polytetrafluorethylen-Compound. Unter einem Polytetrafluorethylen-Compound ist ein Gemisch aus PTFE und mindestens einem organischen oder anorganischen Füllstoff zu verstehen. Die gewählten Materialien unterstützen die Funktion der Dichtung.

Solche Materialien eignen sich hervorragend bei hohen thermischen Beanspruchungen. Ferner zeigen sie gute Trockenlaufeigenschaften, sind in hohem Maße verschleißfest und insbesondere für hohe Umfangsgeschwindigkeiten einer Motorwelle geeignet.

Weitere Materialausführungen mit elastischer bzw. dämpfender Wirkung besitzen keine einschränkende Wirkung auf die Dichtungsanordnung.

Aufgrund der Möglichkeit, dass alle Teilbereiche und Formabschnitte der Wellendichtung das gleiche oder verschiedene Materialien aufweisen können, ist es möglich, dass die Wellendichtungsanordnung aus mindestens einem oder mehreren zusammenhängenden Bauteilen besteht.

Ferner ist eine beliebige Kombination der oben genannten Merkmale möglich. So ist es z. B. auch möglich, dass die räumlich-wellenartige Erweiterung mindestens einen Einspannringbereich auf der dem Lager zugewandten Seite aufweist. Somit ist das Lager im Inneren des Topfes ebenfalls anspannbar bzw. ein Kraftfluss von der Welle hin zum Gehäuse durch die Wellendichtungsanordnung möglich.

Weitere Merkmale, Vorteile und Ausführungsvarianten der Erfindung sind Gegenstand der nachfolgenden Beschreibung und der zeichnerischen Darstellung von Ausführungsbeispielen.

### Kurzbeschreibung der Figuren

Die Erfindung wird nachfolgend anhand der Figuren näher erläutert. Es zeigen:
- Fig. 1: Schnittansicht einer Gebläseanordnung mit einer erfindungsgemäßen Dichtungsanordnung, die um eine zu einem Gehäuse drehbar gelagerte Welle eingesetzt ist,
- Fig. 2a: eine vergrößerte Schnittansicht der Wellendichtungsanordnung aus Fig. 1,
- Fig. 2b: zwei alternative Ausführungsformen des Auslenkringbereichs und der Dichtlippe,
- Fig. 3: eine weitere Ausführungsform der Wellendichtungsanordnung in einer weiteren Schnittansicht einer Gebläseanordnung.

### Beschreibung der Figuren

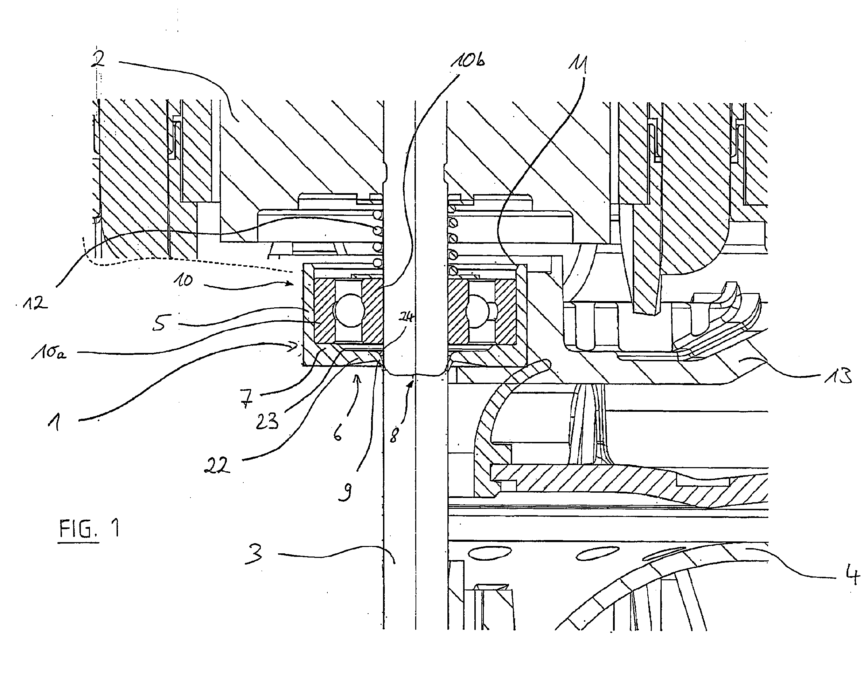

Fig. 1 zeigt eine Gebläseanordnung mit einem Elektromotor 2 und mit einer Motorwelle 3, ein von der Motorwelle 3 angetriebenes, in einem Gehäuse angeordnetes Gebläserad 4, ein Wellenlager 10 und eine Wellendichtungsanordnung 1, die die Form eines Topfes aufweist, wobei das Wellenlager 10 in die Wellendichtungsanordnung 1 eingesetzt ist, die eine Dichtungsöffnung für den Durchtritt der Motorwelle aufweist.

Auf eine Darstellung des Bereichs links neben der Motorwelle wurde aus Gründen der Übersichtlichkeit bzw. der einfacheren Beschriftung durch Bezugsziffern verzichtet.

Die Wellendichtungsanordnung 1 ist um die Dichtungsöffnung 8 herum als ein sich radial erstreckender Bodenringbereich 6 ausgebildet, der zur Dichtungsöffnung 8 hin eine Dichtlippe 9 aufweist.

An einem axialen Ende der Wellendichtungsanordnung bildet der Bodenringbereich 6 den Topfboden bzw. eine Stirnseite der zylindrischen Topfform, die im Wesentlichen einen Lagerringbereich 5 bildet.

Ferner untergliedert sich der Bodenringbereich 6 in drei Formabschnitte, einen Einspannringbereich 7, einen Auslenkringbereich 22 und eine Dichtlippe 9.

Die Wellendichtungsanordnung 1 auf der dem Wellenlager 10 zugewandten Seite weist den Einspannringbereich 7 auf, der sich ausgehend vom unteren Ende des Lagerringbereichs 5 radial nach innen erstreckt. Hierbei hat der Lagerringbereich 5 eine geringere Wandstärke als der Einspannringbereich 7. Dabei ist der Einspannringbereich 7 im rechten Winkel zum Lagerringbereich 5 orientiert.

Der Einspannringbereich 7 geht über in den zweiten Formabschnitt des Bodenringbereichs 6, den Auslenkringbereich, über. Am Übergang zwischen Einspannringbereich 7 und Auslenkringbereich 22 ist ein Absatz auf der Innenseite des Topfbodens ausgebildet, wodurch sich eine geringere Wandstärke des Auslenkringbereichs 22 im Vergleich zum Einspannringbereich 7 ergibt. An der Topfaußenseite, gegenüberliegend dem Absatz der Innenseite des Topfbodens, geht der Einspannringbereich 7 in einem Knick 23 in den Auslenkringbereich 22 über.

Dabei nähert sich der äußere Topfboden des Auslenkringbereichs 22 dem inneren Boden an, wohingegen der innere Topfboden nach dem Absatz des Auslenkringbereichs 22 waagrecht weitergeführt wird. Somit ergibt sich eine keilförmige Ausbildung des Auslenkringbereichs 22.

Im Anschluss an den Auslenkringbereich 22 ist als dritter Formabschnitt des Bodenringbereichs 22 die Dichtlippe 9 ausgebildet, die eine Fortführung der keilförmigen Form des Auslenkringbereichs 22 darstellt. Im Übergang zwischen Auslenkringbereich 22 und Dichtlippe 9 befindet sich eine Abwinklung 24, die die Dichtlippe in Richtung der Außenseite des Topfbodens abwinkelt, so dass diese in einem Winkel von ca. 45 Grad auf die Welle 3 trifft. Der Winkel der Abwinklung wird hierbei aus einer zur Achse der Motorwelle senkrechten Ebene bestimmt.

Die Dichtlippe 9 beschreibt eine Dichtungsöffnung 8 für den Durchtritt der Motorwelle, wobei der Innenradius der Dichtungsöffnung 8 geringer oder gleich dem Durchmesser der Motorwelle 3 ist. Dies gewährleistet einen engen Sitz auf der Motorwelle.

An der dem Bodenringbereich 6 gegenüberliegenden Stirnseite des Lagerringbereichs weist dieser auf der Innenseite eine Phase 11 auf. Diese Ausgestaltung an dem anderen axialen Ende erleichtert das Einsetzen des Wellenlageraußenrings 10b in die Wellendichtungsanordnung 1.

Das in den Lagerringbereich 5 eingesetzte Wellenlager 10a weist einen Innenring 10c und einen Außenring 10b mit Lagerkugeln zwischen beiden Ringen auf. Hierbei ist der Innenring 10c auf der Welle mittels einer Presspassung befestigt.

In der Ausführung von Fig. 1 hat der Außendurchmesser des Lageraußenrings 10b einen größeren Durchmesser als die Wellendichtungsanordnung 1 im Bereich des Lagerringbereichs 5. Somit liegt zwischen diesen beiden Bauteilen ebenfalls eine Presspassung vor, wodurch der äußere Lagerring radial festgelegt wird.

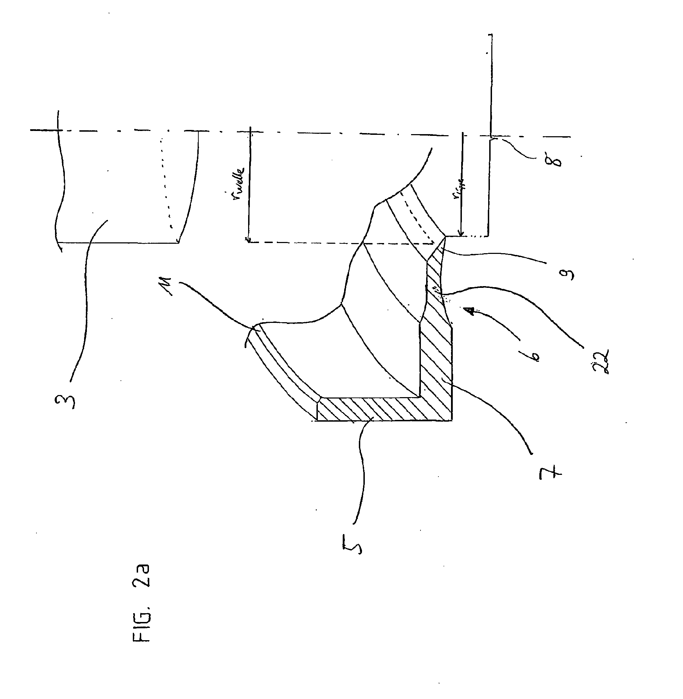

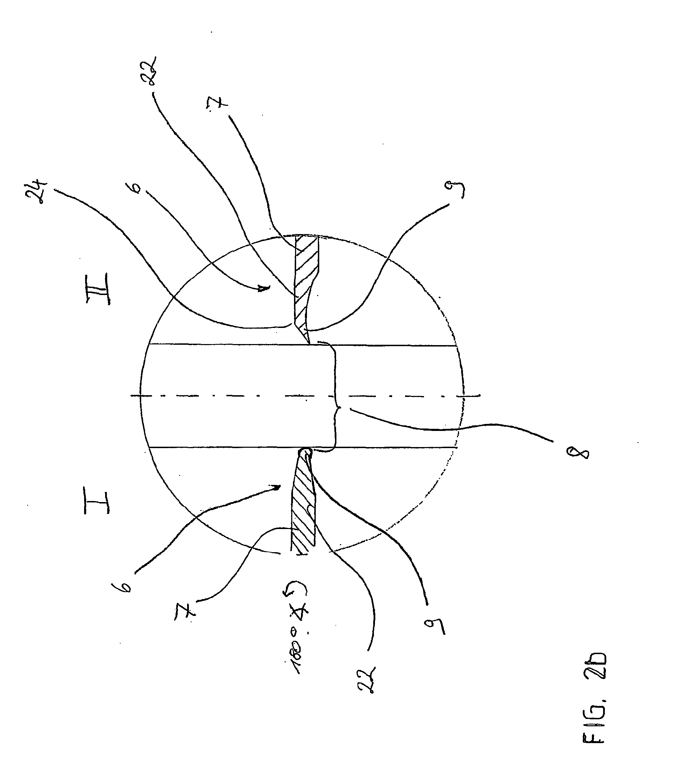

Fig. 2a zeigt eine geschnittene Einzelteilansicht der Wellendichtungsanordnung 1 aus Fig. 1. Hier sind die einzelnen Teilbereiche der Dichtungsanordnung wie Lagerringbereich 5 mit 45 Grad Phase 11 und Bodenringbereich 6 mit Einspannringbereich 7, Auslenkringbereich 22 und Dichtlippe 9 dargestellt.

Hierbei weist der Einspannringbereich 7 eine größere Wandstärke auf, als der Lagerringbereich 5, wobei die inneren und äußeren Oberflächen in einem rechten Winkel zueinander angeordnet sind.

An den Einspannringbereich 7 schließt sich der Auslenkringbereich 22 an. Der Einspannringbereich 7 geht sowohl an der Außenseite des Topfbodens als auch an der Innenseite in einem verrundeten Absatz in den Auslenkringbereich 22 über.

Hierbei liegt die Wandstärke unterhalb der Wandstärke des Auslenkringbereichs 22 und des Lagerringbereichs 5.

Im weiteren Verlauf der inneren Oberfläche der Wellendichtungsanordnung 1 ist nach dem Absatz die innere Oberfläche horizontal ausgebildet, wohingegen die äußere den in einem Radius verrundeten Absatz bis zur Dichtlippe 9 fortführt.

Die innere Oberfläche der Wellendichtungsanordnung 1 trifft durch Ausbildung der Dichtlippe 9 mit der unteren zusammen. Dies wird durch eine Abwinklung der Innenoberfläche erreicht. Hierbei schließen die innere Oberfläche der Dichtlippe 9 und die Innenoberfläche des Auslenkringbereichs 11 einen Winkel von ca. 230 Grad ein. Somit ergibt sich ein Winkel zwischen den Oberflächen der Welle 3 und der Dichtlippe 9 von ca. 55 Grad.

In der in Fig. 2a gezeigten Ausführung ist die Motorwelle 3 noch nicht durch die Dichtungsöffnung 8 eingebracht worden. Desweiteren weist die Welle einen größeren Radius (r_{Welle}) auf als der Innenradius der Dichtungsöffnung 8 (r_{Lippe}).

In Fig. 2b-I hat die Dichtlippe 9 ein stumpfes rundes Ende, wobei der Auslenkringbereich 22 in die Dichtlippe 9 ohne eine Abwinklung übergeht und somit einen 180 Grad Winkel zwischen den Oberflächen einschließt.

Diese Ausführung zeigt ferner eine Dichtungsöffnung 8 mit gleichem Durchmesser wie die Motorwelle 3.

In Fig. 2b-II weist die Wellendichtungsanordnung 1 eine spezielle Dichtlippe 9 auf, mit einem hakenförmigen Auslenkringbereich 22 und Dichtlippe 9.

Bei dieser besonderen Ausführungsform des Auslenkringbereichs 22 mit der Dichtlippe 9 hat die Dichtungsöffnung 8 einen kleineren Durchmesser als die Motorwelle 3. Folglich wird die Dichtwirkung aber auch die Reibung zwischen Motorwelle 3 und Dichtlippe 9 erhöht.

Die Wellendichtungsanordnung 1 bzw. deren Auslenkringbereich 22 und deren Dichtlippe 9 sind ähnlich ausgeführt wie in Figur 2a. Hier schließt die Innenoberfläche der Dichtlippe 9 mit der Wellenoberfläche ca. einen 60 Grad Winkel ein, wobei die inneren Oberflächen von Dichtlippe 9 und Auslenkringbereich 22 ca. in einem 270 Grad Winkel zueinander stehen. Desweiteren ist nur auf der Außenseite ein Übergang von Einspannringbereich 7 zu Auslenkringbereich 22 ausgeführt.

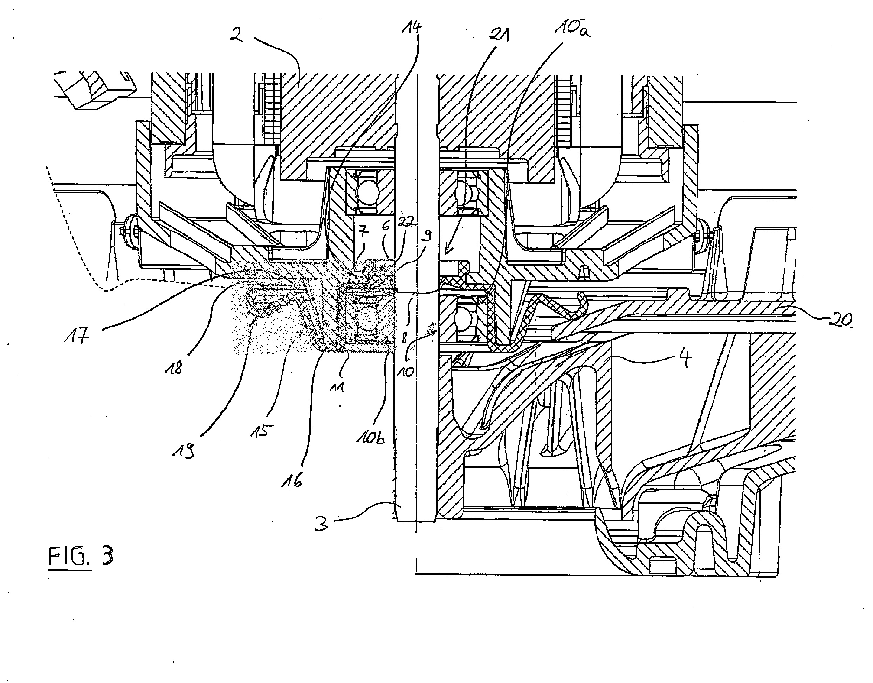

Fig. 3 zeigt eine besonders bevorzugte Ausführungsform der Wellendichtungsanordnung 1 in einer Gebläseanordnung mit einem Elektromotor 2 und mit einer Motorwelle 3, ein von der Motorwelle 3 angetriebenes, in einem Gehäuse angeordnetes Gebläserad 4, ein Wellenlager 10 und eine Wellendichtungsanordnung 1, die die Form eines Topfes aufweist, wobei das Wellenlager 10 in die Wellendichtungsanordnung 1 eingesetzt ist, die eine Dichtungsöffnung für den Durchtritt der Motorwelle aufweist.

Auf eine Darstellung des Bereichs links neben der Motorwelle wurde, ähnlich zu Fig. 1, aus Gründen der Übersichtlichkeit bzw. der einfacheren Beschriftung durch Bezugsziffern verzichtet.

Die Wellendichtungsanordnung 1 ist um die Dichtungsöffnung 8 herum als ein sich radial erstreckender Bodenringbereich 6 ausgebildet, der zur Dichtungsöffnung 8 hin eine Dichtlippe 9 aufweist.

Der Bodenringbereich 6 bildet hierbei den Topfboden bzw. eine Stirnseite der zylindrischen Topfform, die einen Lagerringbereich 5 bildet.

Ferner untergliedert sich der Bodenringbereich 6 in vier Formabschnitte, einen Einspannringbereich 7, einen Auslenkringbereich 22, eine Dichtlippe 9 und eine Einknöpfnut 14.

Wie in der Ausführungsvariante aus Fig. 1, erstreckt sich der Einspannringbereich 7 als erster Teilabschnitt ausgehend vom oberen Ende des Lagerringbereichs 5 radial nach innen. Bei dieser besonderen Ausführungsform weist der hohlzylindrische Lagerringbereich 5 eine größere Wandstärke als der Einspannringbereich 7 auf, wobei der Einspannringbereich 7 im rechten Winkel zum Lagerringbereich 5 angeordnet ist.

Desweiteren ist im Übergang zwischen dem Einspannringbereich 7 und dem Auslenkringbereich 22 kein erhöhter Absatz wie in der Ausführung aus Fig. 1 zu erkennen. Stattdessen ist ein Absatz durch einen Knick im Übergang vom Einspannringbereich 7 in den Auslenkringbereich 22 (zweiter Formabschnitt) die Innenseite des Topfbodens nach außen ausgebildet.

Dies vermeidet eine Berührung und somit Reibung des Innenrings 10c an der Wellendichtungsanordnung und gewährleistet dem Lagerinnenring 10c mit der Welle 3 einen freien Lauf.

Nach dem geknickten Übergang 24 des Einspannringbereichs 7 in den Auslenkringbereichs 22 nähert sich der innere Topfboden dem äußeren an, wohingegen der äußere Topfboden auf der gesamten Außenseite waagrecht ausgebildet ist.

Somit ergibt sich eine keilförmige Gestalt des Auslenkringbereichs 22, deren Verlauf von der Innenseite des Bodenringbereichs 6 weg zeigt.

Im Anschluss an den Auslenkringbereich 22 ist als dritter Formabschnitt des Bodenringbereichs 22 die Dichtlippe 9 ausgebildet. Diese stellt eine Fortführung der keilförmigen Gestalt des Auslenkringbereichs 22 dar. Im Übergang zwischen Auslenkringbereich 22 und Dichtlippe 9 befindet sich eine Abwiriklung 24 mit einem Winkel von ca. 240 Grad. Diese winkelt die Dichtlippe 9 in Richtung der Außenseite des Topfbodens ab, so dass diese in einem Winkel von ca. 30 Grad auf die Welle 3 trifft.

Die radial verlaufende Dichtlippe 9 beschreibt eine Dichtungsöffnung 8 für den Durchtritt der Motorwelle, wobei der Innenradius der Dichtungsöffnung 8 kleiner oder gleich dem Durchmesser der Motorwelle 3 ist. Dies gewährleistet einen engen Sitz auf der Motorwelle.

An der Topfaußenseite, gegenüberliegend dem Knick auf der Innenseite des Topfbodens, bildet der Auslenkringbereich 22 an der Bodenaußenseite der Topfform eine radialsymmetrische Einknöpfnut 14, den vierten Formabschnitt, aus.

Diese hakenförmige Einknöpfnut 14 umgreift den Innenumfang einer Durchgangsbohrung 21 im Gehäuse für die Motorwelle 3.

Auf diese Weise wird die Wellendichtungsanordnung 1 kraft- und formschlüssig an dem zugeordneten Bauteil, dem Gehäuse mit Durchgangsbohrung 21, gehalten und kann ihre Lage während eines Montagevorgangs unverändert beibehalten.

Im weiteren Verlauf des äußeren Topfbodens wird der radial weiter innen liegende, waagrechte Boden nach der Einknöpfnut in einem Höhensprung weg vom Topfinneren fortgesetzt. Diese Anordnung auf einer anderen Höhe hilft zum einen die Einknöpfnut zu versteifen und zum anderen wird dadurch die keilförmige Gestalt des Auslenkringebereichs 22 ermöglicht.

An der dem Bodenringbereich 6 gegenüberliegenden offenen Stirnseite weist die Wellendichtungsanordnung 1 im Topfinneren eine Phase 11 auf, welche das Einsetzen des Wellenlagers 10a mit seinem Außenring 10d und dem Innenring 10c erleichtert.

Ferner ist an der offenen Stirnseite außenseitig eine Erweiterung 15 angeordnet, die eine räumlich-wellenförmige Form aufweist.

Die räumlich-wellenförmige Erweiterung 15 beginnt an der Außenseite der zylindrischen Mantelfläche der Topfform mit einem radialsymmetrischen Randabschnitt 16. Dieser ist in einem rechten Winkel weg von der Symmetrieachse ausgebildet und weist die Form eines Kreisrings auf.

Der Randabschnitt 16, der den ersten Teil der räumlich-wellenartigen Erweiterung 15 bildet bzw. das erste Wellental hat einen Innendurchmesser, der gleich dem Innendurchmesser des Lagerringbereichs 5 ist, und einen Außendurchmesser, welcher größer als der des Lagerringbereichs 5 ist.

Am äußeren radialen Rand des Randabschnitts 16 wölbt sich die räumlich-wellenartige Erweiterung in einem Radius schräg nach hinten und nach außen, d. h. in Richtung des gegenüberliegenden Bodenringbereichs 6, wobei eine radiale Ausbreitung beibehalten wird.

Dieser fortgesetzte gewölbte Randabschnitt 16 bildet vor dem Erreichen der Höhe des Bodenringbereichs 6 einen Wellenberg 17. Dieser wölbt sich in einem Radius vom Topfboden weg, unter Beibehaltung der radialen Ausbreitung.

Nach Überschreiten des Wellenberges 17 setzt sich die räumlich-wellenartige Erweiterung 15 in einer nach unten laufenden zweiten Hälfte der Welle, die eine kürzere Länge aufweist als die erste, fort.

Hiernach ändert die Erweiterung 15 erneut die Richtung und bildet mittels einer Krümmung zurück in Richtung des Topfbodens ein zweites Wellental 18. Nach Durchschreiten des Wellentals 18 endet die räumlich-wellenartige Erweiterung 15, so dass als Ende die Form eines runden Wellentales bleibt. Dieses bildet eine umlaufende Dichtkante 19 in Form eines Halbkreises mit der Funktion, zwei Räume gegeneinander abzudichten, bzw. die Motorwelle und das Gehäuse 20.

Aufgrund der Formgebung der Wellendichtungsanordnung 1 bzw. der räumlich-wellenartigen Erweiterung 15 wird zum einen ein Um- oder Ausstülpen der Dichtungsanordnung bei einem Unter- oder Überdruck im Inneren des Gehäuse 20 vermieden und zum anderen eine federnde Druckanlage bereitgestellt.

Somit liegt die Wellendichtungsanordnung 1 mit Hilfe der räumlich-wellenartigen Erweiterung 15 gegen das Gehäuse 20 mit Druck an. Dadurch werden jene

Schwingungen gedämpft, die ein besonders eigenes Resonanzverhalten entwickeln.

Ferner wird anhand der federnden Anlage eine gute Dichtwirkung erreicht, da die räumlich wellenartige Erweiterung 15 abdichtend an einer zugewandten Fläche am Gehäuse anliegt. Auch Bewegungen eines vibrierenden Gehäuses werden nicht nur abfedert und somit auch gedämpft, sondern es wird auch das Entstehen eines Dichtspalts verhindert.

Der Durchmesser der federnden Anlage orientiert sich an dem abzudichtenden Gehäuse 20 und ist auf diese Art vorbestimmt.

Zur Ausübung des Anlagedrucks wird die federnd ausgebildete Erweiterung an ihrem Ursprungsort, dem radialsymmetrischen Randabschnitt 16 abgestützt.

In der beschriebenen Ausführung sind alle Bestandteile der Wellendichtungsanordnung 1 aus einem zusammenhängenden Bauteil ausgeführt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

So ist es möglich, dass die räumlich-wellenförmige Erweiterung 15 nicht nur eine räumlich-wellenförmige Form der beschriebenen Art aufweist, sondern sich auch aus halbkreisförmigen Elementen (konkav oder konvex) und/oder zick-zack-förmigen Elementen zusammensetzt. Im Falle einer zick-zack-artigen Form kann diese an ihrem Richtungsübergängen verrundet und/oder spitz ausgebildet sein.

Auch ist ein Lagerring möglich, welcher nicht nur innere und äußere Formen von radialer Symmetrie aufweist, sondern auch davon abweichende.

### Bezugszeichenliste:

- 1: Wellendichtungsanordnung
- 2: Elektromotor
- 3: Motorwelle
- 4: Gebläserad
- 5: Lagerringbereich
- 6: Bodenringbereich
- 7: Einspannringbereich
- 8: Dichtungsöffnung
- 9: Dichtlippe
- 10a: Wellenlager
- 10b: Außenring
- 10c: Innenring
- 11: Phase
- 12: Spiralfeder
- 13: Lagerschild
- 14: Einknöpfnut
- 15: räumlich-wellenartige Erweiterung
- 16: Randabschnitt
- 17: Wellenberg
- 18: Wellental
- 19: Dichtkante
- 20: Gehäuse
- 21: Durchgangsbohrung
- 22: Auslenkringbereich
- 23: Knick
- 24: Abwinklung

## Patentansprüche

1. Gebläseanordnung umfassend
- einen Elektromotor (2) mit Motorwelle (3),
- ein von der Motorwelle (3) angetriebenes, in einem Gehäuse angeordnetes Gebläserad (4),
- mindestens ein Wellenlager (10)
- eine Wallendichtungsanordnung (1), die die Form eines Topfes aufweist,
- wobei das mindestens eine Wellenlager (10) in die Wellendichtungsanordnung (1), die eine Dichtungsöffnung (8) für den Durchtritt der Motorwelle (3) aufweist, eingesetzt ist,
- wobei die Wellendichtungsanordnung (1) um die Dichtungsöffnung (8) herum einen sich radial erstreckender Boden-Ringbereich (6) bildet, der zur Dichtungsöffnung (8) hin mindestens eine Dichtlippe (9) aufweist.

2. Gebläseanordnung nach Anspruch 1, **dadurch gekennzeichnet, dass** die Wellendichtungsanordnung (1) das mindestens eine Wellenlager (10) abdichtet.

3. Gebläseanordnung nach einem der Ansprüche 1 - 2, **dadurch gekennzeichnet, dass** die Dichtlippe (9) in zur Motorwelle (3) axialer Richtung vor und/oder hinter, d.h. axial außenseitig und/oder axial innenseitig bezüglich dem mindestens einen Wellenlager (10) ausgebildet ist.

4. Gebläseanordnung nach einem der Ansprüche 1 - 3, **dadurch gekennzeichnet, dass** die Wellendichtungsanordnung (1) auf der dem Wellenlager (10) zugewandten Seite einen Einspannringbereich (7) aufweist, der in einen Auslenkringbereich (22) übergeht.

5. Gebläseanordnung nach mindestens einem der vorangehenden Ansprüche, **dadurch gekennzeichnet, dass** die mindestens eine Dichtlippe (9) in einem Bereich von 15 - 5 Grad hin zur Achse der Motorwelle (3) geneigt ist.

6. Gebläseanordnung nach mindestens einem der vorangehenden Ansprüche, **dadurch gekennzeichnet, dass** die Wellendichtungsanordnung (1) eine Erweiterung (15) aufweist.

7. Gebläseartordnung nach Anspruch 6, **dadurch gekennzeichnet, dass** die Erweiterung (15) die Motorwelle (3) und mindestens ein Gehäuse (20) abdichtet.

8. Gebläseanordnung nach Anspruch 6 oder 7, **dadurch gekennzeichnet, dass** die Erweiterung (15) eine wellenartige Form aufweist.

9. Gebläseanordnung nach Anspruch 8, **dadurch gekennzeichnet, dass** Übergänge bei der wellenartigen Form verrundet und/oder spitz ausgebildet sind.

10. Gebläseanordnung nach einem der Ansprüche 6 - 9, **dadurch gekennzeichnet, dass** die Erweiterung (15) federnd ausgebildet ist, um mit Druck gegen das Gehäuse (20) anzuliegen.

11. Gebläseanordnung nach Anspruch 10, **dadurch gekennzeichnet, dass** sich die federnd ausgebildete Erweiterung (15) an einem Randabschnitt abgestützt ist.

12. Gebläseanordnung nach einem der Ansprüche 6 - 11, **dadurch gekennzeichnet, dass** die mindestens eine Dichtlippe (9) und/oder die mindestens eine Erweiterung (15) und/oder die im Bereich des Wellenlagers (10) topfförmige Wellendichtungsanordnung (1) aus demselben Materialien gebildet ist.

13. Gebläseanordnung nach mindestens einem der vorangehenden Ansprüche, **dadurch gekennzeichnet, dass** die Wellendichtungsanordnung (1) Fluorpolymer undloder ein Polytetrafluorethylen-Compound aufweist.

14. Gebläseanordnung nach mindestens einem der vorangehenden Ansprüche, **dadurch gekennzeichnet, dass** der Durchmesser der Dichtungsöffnung (8) kleiner oder gleich dem Durchmesser der Motorwelle (3) ist.

15. Gebläseanordnung nach mindestens einem der vorangehenden Ansprüche, **dadurch gekennzeichnet, dass** die Wellendichtungsanordnung (1) eine Einknöpfnut (14) aufweist.

## Claims

1. Blower arrangement comprising
- an electric motor (2) with motor shaft (3)
- an impeller (4) driven by the motor shaft (3), arranged in a housing
- at least one shaft bearing (10)
- a shaft sealing arrangement (1), having the shape of a pot
- wherein the at least one shaft bearing (10) is inserted into the shaft sealing arrangement (1), which has a sealing opening (8) for the passage of the motor shaft (3)
- wherein the shaft sealing arrangement (1) forms a radially extending annular bottom region (6) around the sealing opening (8), having at least one sealing lip (9) toward the sealing opening (8).

2. Blower arrangement according to claim 1, **characterized in that** the shaft sealing arrangement (1) seals off the at least one shaft bearing (10).

3. Blower arrangement according to one of claims 1-2, **characterized in that** the sealing lip (9) is configured in the axial direction to the motor shaft (3) before and/or after, that is, on the axial outside and/or the axial inside, with respect to the at least one shaft bearing (10).

4. Blower arrangement na according to one of claims 1-3, **characterized in that** the shaft sealing arrangement (1) has an annular clamping region (7) on the side facing the shaft bearing (10), which passes into an annular deflection region (22).

5. Blower arrangement according to at least one of the preceding claims, **characterized in that** the at least one sealing lip (9) is inclined in a range of 15-45 degrees toward the axis of the motor shaft (3).

6. Blower arrangement according to at least one of the preceding claims, **characterized in that** the shaft sealing arrangement (1) has an enlargement (15) aufweist.

7. Blower arrangement according to claim 6, **characterized in that** the enlargement (15) seals off the motor shaft (3) and at least one housing (20).

8. Blower arrangement according to claim 6 or 7, **characterized in that** the enlargement (15) has a wavelike shape.

9. Blower arrangement according to claim 8, **characterized in that** rounded and/or pointed transitions are formed in the wavelike shape.

10. Blower arrangement according to one of claims 6-9, **characterized in that** the enlargement (15) has a spring action so as to bear with pressure against the housing (20).

11. Blower arrangement according to claim 10, **characterized in that** the spring-action enlargement (15) is braced against an edge segment

12. Blower arrangement according to one of claims 6-11, **characterized in that** the at least one sealing lip (9) and/or the at least one enlargement (15) and/or the potlike shaft sealing arrangement (1) in the region of the shaft bearing (10) are made from the same materials.

13. Blower arrangement according to at least one of the preceding claims, **characterized in that** the shaft sealing arrangement (1) has fluoropolymer and/or a polytetrafluorethylene compound.

14. Blower arrangement according to at least one of the preceding claims, **characterized in that** the diameter of the sealing opening (8) is smaller than or equal to the diameter of the motor shaft (3).

15. Blower arrangement according to at least one of the preceding claims, **characterized in that** the shaft sealing arrangement (1) has a buttoning groove (14).

## Revendications

1. Agencement de soufflante comprenant
- un moteur électrique (2) doté d'un arbre de moteur (3),
- une roue de soufflante (4) entraînée par l'arbre de moteur (3), agencée dans un logement,
- au moins un palier d'arbre (10),
- un agencement d'étanchéité d'arbre (1), ayant la forme d'un pot,
- dans lequel l'au moins un palier d'arbre (10) est inséré dans l'agencement d'étanchéité d'arbre (1), qui comporte une ouverture d'étanchéité (8) pour le passage de l'arbre de moteur (3)
- dans lequel l'agencement d'étanchéité d'arbre (1) forme une région de fond annulaire s'étendant radialement (6) autour de l'ouverture d'étanchéité (8), ayant au moins une lèvre d'étanchéité (9) vers l'ouverture d'étanchéité (8).

2. Agencement de soufflante selon la revendication 1, **caractérisé en ce que** l'agencement d'étanchéité d'arbre (1) obture l'au moins un palier d'arbre (10).

3. Agencement de soufflante selon l'une des revendications 1 à 2, **caractérisé en ce que** la lèvre d'étanchéité (9) est configurée dans la direction axiale au moteur d'arbre (3) avant et/ou après, c'est-à-dire sur l'extérieur axial et/ou l'intérieur axial, par rapport à l'au moins un palier d'arbre (10).

4. Agencement de soufflante selon l'une des revendications 1 à 3, **caractérisé en ce que** l'agencement d'étanchéité d'arbre (1) comporte une région de serrage annulaire (7) sur le côté orienté vers le palier d'arbre (10), qui passe dans une région de flexion annulaire (22).

5. Agencement de soufflante selon au moins l'une des revendications précédentes, **caractérisé en ce que** l'au moins une lèvre d'étanchéité (9) est inclinée dans une plage de 15 à 45 degrés vers l'axe de l'arbre de moteur (3).

6. Agencement de soufflante selon au moins l'une des revendications précédentes, **caractérisé en ce que** l'agencement d'étanchéité d'arbre (1) comporte un agrandissement (15).

7. Agencement de soufflante selon la revendication 6, **caractérisé en ce que** l'agrandissement (15) obture l'arbre de moteur (3) et au moins une logement (20).

8. Agencement de soufflante selon la revendication 6 ou 7, **caractérisé en ce que** l'agrandissement (15) a une forme ondulée.

9. Agencement de soufflante selon la revendication 8, **caractérisé en ce que** des transitions arrondies et/ou pointues sont formées dans la forme ondulée.

10. Agencement de soufflante selon l'une des revendications 6 à 9, **caractérisé en ce que** l'agrandissement (15) a une action de ressort de façon à résister à une pression contre le logement (20).

11. Agencement de soufflante selon la revendication 10, **caractérisé en ce que** l'agrandissement à action de ressort (15) est renforcé contre un segment de bord.

12. Agencement de soufflante selon l'une des revendications 6 à 11, **caractérisé en ce que** l'au moins une lèvre d'étanchéité (9) et/ou l'au moins un agrandissement (15) et/ou l'agencement d'étanchéité d'arbre en pot (1) dans la région du palier d'arbre (10) sont réalisés à partir des mêmes matériaux.

13. Agencement de soufflante selon au moins l'une des revendications précédentes, **caractérisé en ce que** l'agencement d'étanchéité d'arbre (1) comporte un composé en fluoropolymère et/ou en poly(tétrafluoroéthylène).

14. Agencement de soufflante selon au moins l'une des revendications précédentes, **caractérisé en ce que** le diamètre de l'ouverture d'étanchéité (8) est inférieur ou égal au diamètre de l'arbre de moteur (3).

15. Agencement de soufflante selon au moins l'une des revendications précédentes, **caractérisé en ce que** l'agencement d'étanchéité d'arbre (1) comporte une gorge de boutonnage (14).
